# EUROPEAN PATENT APPLICATION

(11) **EP 4 576 347 A1**
(43) Date of publication of application: **25.06.2025**
(21) Application number: 24826192.7
(22) Date of filing: 13.06.2024
(51) Int. Cl.: H01M 50/124, H01M 50/107, H01M 50/167

(54) **BATTERY CELL, BATTERY PACK AND VEHICLE COMPRISING SAME**

(30) Priority: 23.06.2023 KR 20230081280; 10.06.2024 KR 20240075265
(71) Applicant: LG Energy Solution, Ltd., Seoul 07335 (KR)
(72) Inventor: OH, Jeong-Seop, Daejeon 34122 (KR); KIM, Do-Gyun, Daejeon 34122 (KR); AHN, Seong-Hyeon, Daejeon 34122 (KR); LEE, Seon-Min, Daejeon 34122 (KR); JO, Min-Ki, Daejeon 34122 (KR); HWANGBO, Kwang-Su, Daejeon 34122 (KR)
(74) Representative: Goddar, Heinz J.
(86) International application number: PCT/KR2024/008165
(87) International publication number: WO 2024/262874

(57) **Abstract**

A battery cell according to an embodiment of the present disclosure includes an electrode assembly including a first electrode, a second electrode and a separator interposed between the first electrode and the second electrode, and a battery housing accommodating the electrode assembly through an open portion at a side, wherein at least part of an inside surface of the battery housing is coated by a heat resistant coating.

## Description

### TECHNICAL FIELD

The present disclosure relates to a battery cell, a battery pack and a vehicle including the same.

The present application claims priority to Korean Patent Application No. 10-2023-0081280 filed on June 23, 2023 and Korean Patent Application No. 10-2024-0075265 filed on June 10, 2024 in the Republic of Korea, the disclosures of which are incorporated herein by reference.

### BACKGROUND ART

As secondary batteries can be easily applied to various types of products and have electrical properties such as high energy density, they are commonly used in not only portable devices but also electric vehicles (EVs) or hybrid electric vehicles (HEVs) and electric scooters that are powered by an electrical driving source. Secondary batteries can remarkably reduce the use of fossil fuels. In addition to the primary advantage, another advantage is that they do not generate by-products from the use of energy. Due to these advantages, secondary batteries are gaining attention as a new source of energy that is more eco-friendly and energy efficient.

The types of secondary batteries widely used at present include lithium ion batteries, lithium polymer batteries, nickel cadmium batteries, nickel hydrogen batteries, nickel zinc batteries and so on. A unit secondary battery cell, i.e., a unit battery cell has an operating voltage of about 2.5V to 4.5V. Accordingly, when higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, in the existing battery cell structure, when a thermal event such as fire and/or explosion occurs, in some instances, flames are not released to the atmosphere through vents and may burst from the sidewall of a battery can,. Accordingly, there is a need for safety reinforcement design for battery cells to prevent side rupture, thereby preventing fire and/or explosion spread caused by flame propagation to adjacent battery cells.

### DISCLOSURE

### Technical Problem

The present disclosure is aimed at preventing damage to the side of a battery housing when an event such as fire and/or explosion occurs in a battery cell.

More specifically, the present disclosure is aimed at preventing damage to a beading portion of the battery housing when an event such as fire and/or explosion occurs in the battery cell.

Further, the present disclosure is aimed at preventing flame propagation to adjacent battery cells by preventing damage to the side of the battery housing.

In another aspect, the present disclosure is aimed at preventing fire spread by preventing flame propagation to adjacent battery cells.

The technical problems of the present disclosure to be solved are not limited to the aforementioned problems, and these and other problems will be clearly understood by those skilled in the art from the following description.

### Technical Solution

To solve the above-described problem, a battery cell according to an embodiment of the present disclosure includes an electrode assembly including a first electrode, a second electrode and a separator interposed between the first electrode and the second electrode; and a battery housing accommodating the electrode assembly through an open portion at a side, wherein at least part of an inside surface of the battery housing is coated by a heat resistant coating.

In an aspect of the present disclosure, the battery housing may include a beading portion recessed inward from at least part of the side.

Preferably, the heat resistant coating may cover at least part of the beading portion.

In another aspect of the present disclosure, the beading portion may include an upper surface located at an upper position than a recessed innermost point; and a lower surface located at a lower position than the recessed innermost point.

Preferably, the heat resistant coating may cover the lower surface of the beading portion.

In another aspect of the present disclosure, a length of a coverage of the heat resistant coating in a winding axis direction may have a width of 24% or more of a total length of the battery housing before deformation.

In an aspect of the present disclosure, the heat resistant coating may cover at least part of an area extended from a recessed innermost point of the beading portion in an opposite direction to the open portion.

In another aspect of the present disclosure, the heat resistant coating may cover at least part of an area extended from a starting point of a flat region of an upper surface of the beading portion in an opposite direction to the open portion.

In an aspect of the present disclosure, the heat resistant coating may include at least one of PI, PAI, silicone or epoxide.

For example, the heat resistant coating may include ceramic particles.

In another aspect of the present disclosure, the heat resistant coating may include at least one of TiO₂ or Al₂O₃.

In another aspect of the present disclosure, the heat resistant coating may include a first heat resistant coating present on the battery housing; and a second heat resistant coating present on the first heat resistant coating.

In another aspect of the present disclosure, the heat resistant coating may have a thickness of from 5 micrometers to 40 micrometers.

Meanwhile, the present disclosure provides a battery pack including at least one battery cell according to the above-described embodiment.

Furthermore, the present disclosure provides a vehicle including at least one battery pack according to the above-described embodiment.

### Advantageous Effects

According to the present disclosure, it may be possible to prevent damage to the side of the battery housing when an event such as fire and/or explosion occurs in the battery cell.

More specifically, according to the present disclosure, it may be possible to prevent damage to the beading portion of the battery housing when an event such as fire and/or explosion occurs in the battery cell.

Further, according to the present disclosure, it may be possible to prevent flame propagation to adj acent battery cells by preventing damage to the side of the battery housing.

In another aspect, according to the present disclosure, it may be possible to prevent fire spread by preventing flame propagation to adjacent battery cells.

However, the effects that can be obtained through the present disclosure are not limited to the aforementioned effects, and these and other effects will be clearly understood by those skilled in the art from the following description.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus, the present disclosure should not be construed as being limited to the drawings.
FIG. 1 is a diagram illustrating a battery cell according to an embodiment of the present disclosure.
FIG. 2 is a longitudinal cross-sectional perspective view of FIG. 1.
FIG. 3 is a longitudinal cross-sectional view of the battery cell of FIG. 1.
FIG. 4 is a diagram illustrating a heat resistant coating according to an embodiment of the present disclosure applied to a battery housing before deformation.
FIG. 5 is a diagram illustrating a heat resistant coating according to an embodiment of the present disclosure applied to a battery housing after deformation.
FIG. 6 is an enlarged view of a beading portion of FIG. 5 and its proximity.
FIG. 7 is a diagram illustrating a heat resistant coating according to another embodiment of the present disclosure.
FIG. 8 is a diagram illustrating the shape of a heat resistant coating according to an embodiment of the present disclosure.
FIG. 9 is a diagram illustrating the shape of a heat resistant coating according to another embodiment of the present disclosure.
FIG. 10 is a diagram illustrating the shape of a heat resistant coating according to still another embodiment of the present disclosure.
FIG. 11 is a diagram illustrating flame-induced damage to a battery housing when a thermal event occurs in a battery cell according to a comparative example of the present disclosure.
FIG. 12 is a diagram illustrating prevention of flame-induced damage to a battery housing when a thermal event occurs in a battery cell according to an embodiment of the present disclosure.
FIG. 13 is a diagram illustrating a battery pack including a battery cell according to an embodiment of the present disclosure.
FIG. 14 is a diagram illustrating a vehicle including the battery pack of FIG. 13.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation. Therefore, the embodiments described herein and illustrations in the drawings are provided to describe the exemplary embodiments of the present disclosure by way of example, but not intended to fully describe the technical aspect of the present disclosure, so it should be understood that a variety of other equivalents and modifications could have been made thereto at the time the patent application was filed.

Additionally, in order to help the understanding of the present disclosure, the accompanying drawings are not drawn to scale, and the dimensions of some elements may be exaggerated. Also, the same reference numerals may be affixed to the same elements in different embodiments.

The term "same" may signify "substantially the same". Accordingly, "substantially the same" may include the same but having differences of, for example, 5% or less that is regarded as a low level in the corresponding technical field. Additionally, when a parameter is referred to as being uniform in a certain area, it may represent that the parameter is uniform in the ordinary sense.

The terms "first", "second" and the like, are used to describe different elements, but these elements are not limited by the terms. The terms are used to distinguish one element from another, and unless otherwise stated, a first element may be a second element.

Throughout the specification, unless otherwise stated, each element may be singular or plural.

It should be understood that when an element is referred to as being "on (or below)", it can be present on an upper surface (or a lower surface), or intervening elements may be present between the element and other element disposed on (or below) the element.

It should be further understood that when an element is referred to as being "connected to" or "coupled to" another element, it can be directly connected to the other element but each element may be "connected to" or "coupled to" each other through another element or intervening elements may be present.

In the specification, "A and/or B" refers to either A or B or both unless otherwise stated, and "C to D" refers to C or more and D or less unless otherwise stated.

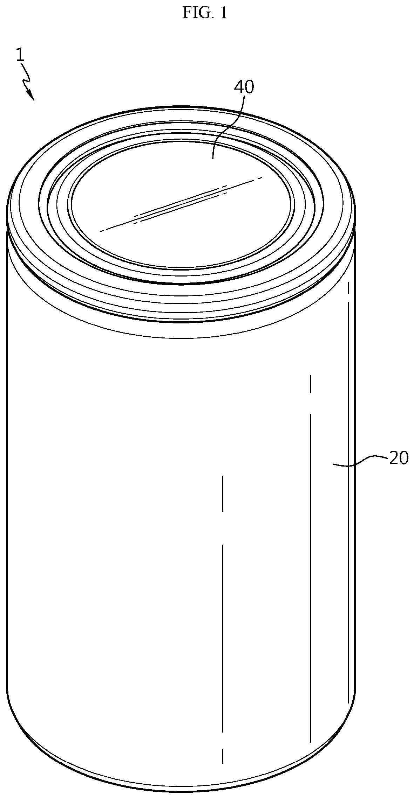

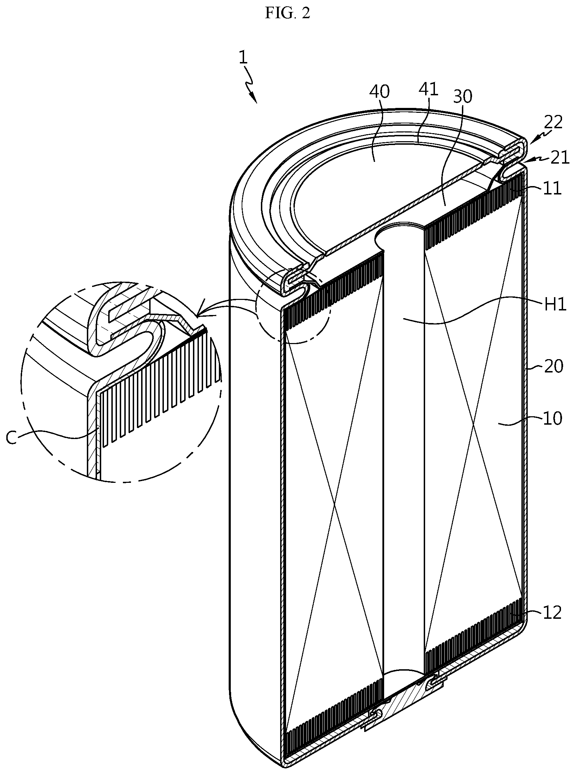

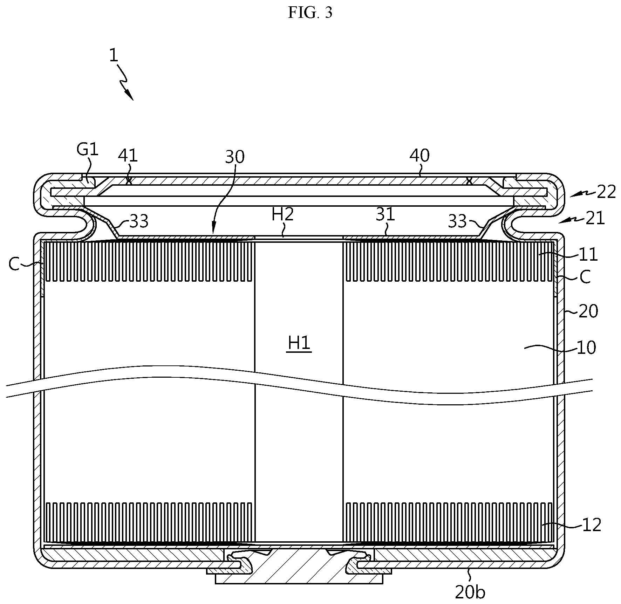

FIG. 1 is a diagram illustrating a battery cell 1 according to an embodiment of the present disclosure, and FIG. 2 is a longitudinal cross-sectional perspective view of FIG. 1. FIG. 3 is a longitudinal cross-sectional view of the battery cell 1 of FIG. 1.

Referring to FIGs. 1 to 3, the battery cell 1 according to an embodiment of the present disclosure includes an electrode assembly 10, a battery housing 20 and a current collector 30. The battery cell 1 may further include a housing cover 40 and/or a terminal 50 and/or a second current collector 60 and/or a sealing gasket G1.

The housing cover 40 may include a venting portion 41 to prevent the internal pressure rise due to gas produced in the battery housing 20. The present disclosure is not limited by the shape of the battery, and may be applied to batteries of other shapes, for example, prismatic batteries.

The electrode assembly 10 includes a first uncoated portion 11 and a second uncoated portion 12. More specifically, the electrode assembly 10 has a structure in which a first electrode and a second electrode are wound around a winding axis with a separator interposed between the first electrode and the second electrode, defining a core and an outer circumferential surface. That is, the electrode assembly 10 applied to the present disclosure may be a jellyroll-type electrode assembly 10. The electrode assembly 10 may be wound around a winding center hole H1. In this case, the electrode assembly 10 may further include an additional separator on the outer circumferential surface for insulation from the battery housing 20. The electrode assembly 10 may have any known winding structure without limitation. Meanwhile, in the present disclosure, a positive electrode active material coated on a positive electrode plate and a negative electrode active material coated on a negative electrode plate may include any known active material without limitation.

Referring to FIGs. 1 to 3, the battery housing 20 is an approximately cylindrical receptacle having an open portion on one side, and is made of a conductive metal. The side of the battery housing 20, and the lower surface located at the opposite side to the open portion are generally integrally formed. That is, the battery housing 20 generally has an open top and a closed bottom in the height direction. The lower surface of the battery housing 20 may have an approximately flat shape. The lower surface of the battery housing 20 may form an outer surface 20a of the closed portion. In this instance, the outer surface 20a of the closed portion may act as a second electrode terminal. The battery housing 20 accommodates the electrode assembly 10 through the open portion formed at one side in the height direction. The battery housing 20 may accommodate an electrolyte together through the open portion.

The battery housing 20 may include a beading portion 21 at an end portion adjacent to the open portion on top of the battery housing 20. The battery housing 20 may further include a clamping portion 22 on the beading portion 21. At least part of the side of the battery housing 20 is recessed inwards. Specifically, the beading portion 21 has a recessed shape from the outer circumferential surface of the battery housing 20 to a predetermined depth along the periphery. More specifically, the beading portion 21 may be recessed inward from the area between the open portion at one side of the battery housing 20 and the accommodation portion accommodating the electrode assembly 10.

The beading portion 21 may provide a support surface where at least part of the edge of the current collector 30 as described below is mounted and coupled. That is, at least part of the edge of the current collector 30 of the present disclosure and/or the edge of the housing cover 40 may be mounted on the upper surface of the beading portion 21. To stably support at least part of the edge of the current collector 30, the upper surface of the beading portion 21 may be extended along a direction approximately parallel to the lower surface of the battery housing 20, i.e., a direction approximately perpendicular to the sidewall of the battery housing 20.

In an aspect of the present disclosure, at least part of the inside surface of the battery housing 20 may be coated by a heat resistant coating C.

For example, referring to FIGs. 2 and 3, the heat resistant coating C may be configured to cover at least part of the inner surface of the battery housing 20. The heat resistant coating C may be, for example, a thin film coating having a heat resistance function. The heat resistant coating C may be applied to an area at which flames are focused when a thermal event occurs in the battery cell 1. The heat resistant coating C may have heat resistance and chemical resistance. That is, the heat resistant coating C may be configured to meet a predetermined heat resistance requirement and a predetermined chemical resistance requirement. For example, the heat resistant coating C may be configured to meet the predetermined requirement in a CV test to test electrolyte side reactions in the operating voltage range of the battery cell 1, and a HF test to test byproducts produced by reaction between the material within the battery cell 1 and the electrolyte solution and HF that reduces cell stability. In particular, the heat resistant coating C may be configured to prevent side rupture by flames in the battery cell 1. Accordingly, the heat resistant coating C may be present in at least part of the inside surface of the battery housing 20.

By the above-described configuration, by the structure in which the heat resistant coating C is present on the inside surface of the battery housing 20, it may be possible to effectively prevent side rupture when a thermal event occurs in the battery cell 1. Accordingly, it may be possible to prevent the fire or explosion in the single cell from spreading.

In another aspect of the present disclosure, the beading portion 21 may include an upper surface located at the higher position than the recessed innermost point; and a lower surface located at the lower position than the recessed innermost point.

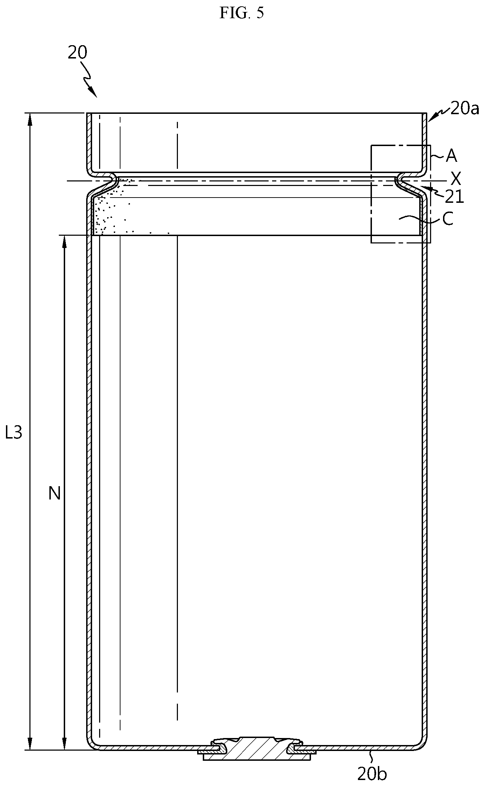

For example, referring to FIG. 3, the beading portion 21 may be recessed from the outer circumferential surface of the battery housing 20 to the predetermined depth along the periphery, and in this instance, may have the upper surface located at the upper position and the lower surface located at the lower position with respect to the innermost point. In this instance, the upper surface may include a flat region. Meanwhile, the lower surface may include a flat region. The flat region may be extended in a direction perpendicular to the winding axis direction of the electrode assembly 10 and may be flat. As an embodiment, as shown in FIG. 3, the upper surface of the beading portion 21 and the lower surface of the beading portion 21 may have a symmetrical shape with respect to an imaginary plane passing through the innermost point of the beading portion 21. Alternatively, as another embodiment, as shown in FIG. 5, the upper surface of the beading portion 21 and the lower surface of the beading portion 21 may have an asymmetrical shape with respect to the imaginary plane passing through the innermost point of the beading portion 21.

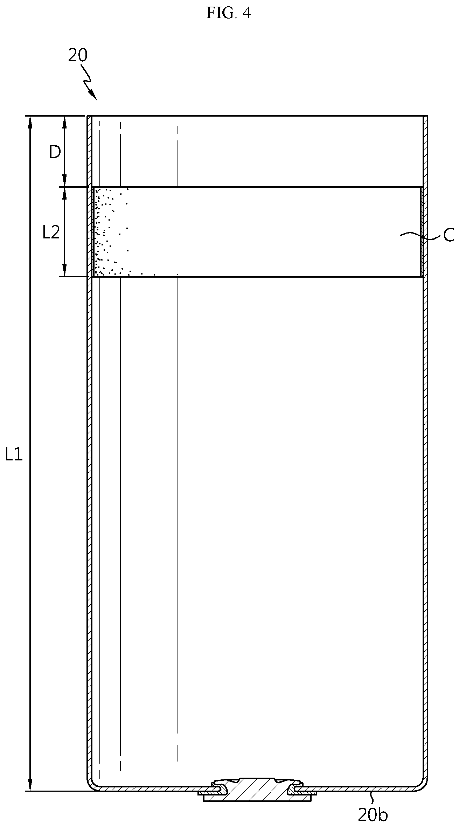

FIG. 4 is a diagram illustrating the heat resistant coating C according to an embodiment of the present disclosure applied to the battery housing 20 before deformation, and FIG. 5 is a diagram illustrating the heat resistant coating C according to an embodiment of the present disclosure applied to the battery housing 20 after deformation.

Referring to FIGs. 4 and 5, the battery housing 20 may undergo a process of forming the beading portion 21 recessed inward from at least part of the outer circumferential surface of the battery housing 20 after the electrode assembly 10 is inserted. Meanwhile the heat resistant coating C may be applied to the inside surface of the battery housing 20 before the process of forming the beading portion 21. In this instance, the heat resistant coating C may be disposed a predetermined distance D away from the open portion of the battery housing 20. For example, referring to FIG. 4, when the total length L1 of the battery housing 20 before deformation is 100%, the heat resistant coating C may be disposed at a location of about 10% of the total length L1 of the battery housing 20 before deformation away from the top open end portion of the battery housing 20. As an embodiment, the heat resistant coating C may be disposed at a location of about 9.76% of the total length L1 of the battery housing 20 before deformation away from the top open end portion of the battery housing 20. Here, the deformation refers to the process of forming the beading portion 21.

In another aspect of the present disclosure, the heat resistant coating C may have a width L2 of about 24% or more of the total length L1 of the battery housing 20 before deformation. As an embodiment, the heat resistant coating C may have the width L2 of about 24.68% or more of the total length L1 of the battery housing 20 before deformation. Accordingly, the lower end portion of the heat resistant coating C may be disposed at a location of about 35% or more of the total length L1 of the battery housing 20 before deformation away from the top open end portion of the battery housing 20.

Preferably, the heat resistant coating C may be applied to a location at which flames are focused within the battery housing 20. Accordingly, a length N from the lower end portion of the heat resistant coating C to the bottom of the battery housing 20 may be less than about 64.64% of the total length L1 of the battery housing 20 before deformation.

Meanwhile, as another embodiment, the width of the heat resistant coating C may be further increased. That is, an embodiment of the lower end portion of the heat resistant coating C extended to the closed portion on the bottom of the battery housing 20 is possible. In this case, because the heat resistant coating C may cover most of the inside surface of the battery housing 20, when a thermal event such as fire and/or explosion occurs in the battery cell 1, the prevention effect of side rupture or damage to the side of the battery housing 20 may be further improved. That is, the heat resistant coating C may be extended to a 100% point from the top open end portion of the battery housing 20. In this case, the heat resistant coating C may be extended to the lower end portion of the battery housing 20.

Next, referring to FIG. 5 showing after the process of forming the beading portion 21, the heat resistant coating C may be configured to cover at least part of the area extended from the recessed innermost point of the beading portion 21 in the opposite direction to the open portion. For example, referring to FIG. 5, when a plane extended in the horizontal direction, i.e., an imaginary plane passing through the innermost point of the beading portion 21 is plane X, the heat resistant coating C may be extended downward from a point at which the plane X and the battery housing 20 meet. Here, the deformation refers to formation of the beading portion 21. The total length L3 of the battery housing 20 after deformation is smaller than the total length L1 of the battery housing 20 before deformation.

In general, a thermal event such as fire and/or explosion occurs in the battery cell 1, flames are released to the atmosphere through the vents. In this process, when flames contact the beading portion 21 recessed inward of the battery housing 20, there is a high likelihood that the battery housing 20 is damaged by flames at the beading portion 21, causing side rupture at the side of the battery housing 20, especially the beading portion 21. In this fire situation, there is a very high risk of flame propagation to the adjacent battery cell 1 and fire and/or explosion spread. Accordingly, it is preferable to increase the heat resistance performance at or around the beading portion 21. By applying the heat resistant coating C to the beading portion 21, the present disclosure may effectively prevent damage to the beading portion 21 when flames inside the battery cell 1 contact the beading portion 21.

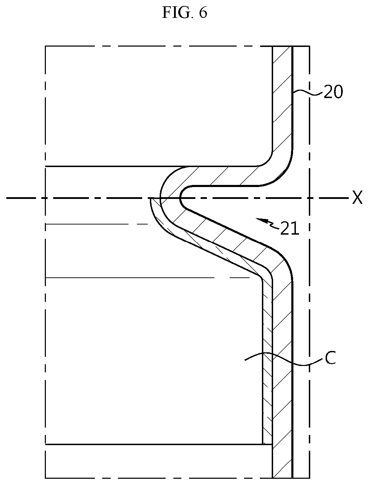

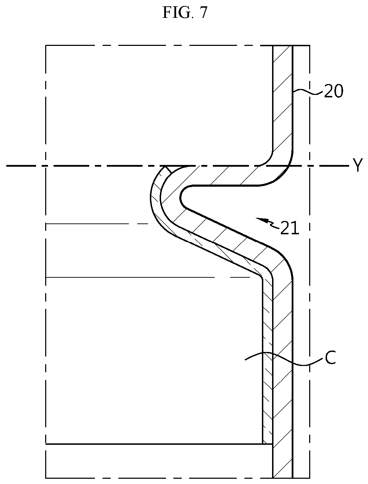

FIG. 6 is an enlarged view of the beading portion 21 of FIG. 5 and its proximity, and FIG. 7 is a diagram illustrating the heat resistant coating C according to another embodiment of the present disclosure.

Referring to FIG. 6, the heat resistant coating C may be configured to cover at least part of the beading portion 21. Preferably, the heat resistant coating C may be configured to cover at least part of the lower surface of the beading portion 21. For example, the heat resistant coating C may be configured to cover at least part of the area extended from the recessed innermost point of the beading portion 21 in the opposite direction to the open portion. More specifically, the heat resistant coating C may be configured to cover at least part of the area extended downward from the recessed innermost point of the beading portion 21.

As described above, in general, when a thermal event occurs in the battery cell 1, flames move toward the lower surface of the beading portion 21, so the lower surface of the beading portion 21 is more vulnerable to flames than the upper surface. In general, a thermal event occurs in the electrode assembly 10, and flames generated from the electrode assembly 10 moves upwards. That is, an edge flow takes place in the battery housing 20, i.e., flames generated from the electrode assembly 10 flow upwards along the inside surface of the battery housing 20. Accordingly, preferably, the heat resistant coating C is first applied to the lower surface of the beading portion 21.

As another embodiment, the heat resistant coating C may be configured to cover at least part of the area extended from the starting point of the flat region of the upper surface of the beading portion 21 in the opposite direction to the open portion. More specifically, the heat resistant coating C may be configured to cover at least part of the area extended downward from the starting point of the flat region of the upper surface of the beading portion 21.

For example, referring to FIG. 7, the upper surface of the beading portion 21 may include the flat region. In this instance, the flat region may be extended in the direction perpendicular to the winding axis direction of the electrode assembly 10 and may be flat. In this instance, when an imaginary plane extended from the flat region of the upper surface of the beading portion 21 is plane Y, the heat resistant coating C may be extended downward from a point at which the plane Y and the battery housing 20 meet. That is, when flames move upwards, the flames may be blocked by the current collector and reside at or near the beading portion 21 for a longer time. Accordingly, in addition to the lower surface of the beading portion 21, the heat resistant coating C preferably further covers the side. The side of the beading portion 21 refers to an area including the innermost point of the beading portion 21.

In another aspect of the present disclosure, referring back to FIGs. 1 to 3, the current collector 30 according to an embodiment of the present disclosure is received in the battery housing 20, and is electrically connected to the electrode assembly 10 and also electrically connected to the battery housing 20. That is, the current collector 30 electrically connects the electrode assembly 10 to the battery housing 20. The current collector 30 includes a support portion 31 located on one surface of the electrode assembly 10, a tab coupling portion 32 extended from the support portion 31 and coupled to the first uncoated portion 11 and a housing coupling portion 33 extended from the support portion 31 and coupled to the inner surface of the battery housing 20. The current collector 30 may include a current collector 30 hole H2 for injection of the electrolyte solution at the center.

The housing coupling portion 33 may include a contact portion 33a coupled to the inner surface of the battery housing 20 and a connection portion 33b connecting the support portion 31 to the contact portion 33a. In an aspect of the present disclosure, the tab coupling portion 32 may have a larger width than the connection portion 33b. In another aspect of the present disclosure, the contact portion 33a may have a larger width than the connection portion 33b.

The contact portion 33a is coupled to the inner surface of the battery housing 20. Preferably, the contact portion 33a may be coupled to the beading portion 21 of the battery housing 20. In this case, for stable contact and coupling, both the beading portion 21 and the contact portion 33a may be extended along a direction approximately parallel to the lower surface of the battery housing 20, i.e., a direction approximately perpendicular to the sidewall of the battery housing 20.

In another aspect of the present disclosure, the housing coupling portion 33 of the current collector 30 may be placed on the beading portion 21 and in this state, be coupled by welding. In this instance, the contact portion 33a of the housing coupling portion 33 may be coupled to the beading portion 21. By the above-described structure, the upper surface of the beading portion 21 may be physically covered by the contact portion 33a. However, the side of the beading portion 21 and the lower surface of the beading portion 21 cannot be physically protected by the contact portion 33a and are placed in a vulnerable condition from flames. Accordingly, more preferably, the heat resistant coating C may be extended downward from the starting point of the flat region of the upper surface of the beading portion 21.

In an aspect of the present disclosure, the heat resistant coating C may include resin and ceramic particles.

In this instance, the resin may include at least one of PI, PAI, silicone or epoxide. Meanwhile, the ceramic may include, for example, at least one of TiO₂ or Al₂O₃. For example, the flame test confirmed that when the heat resistant coating C includes TiO₂, the time at which a sidewall hole of the battery housing 20 is created increased from 14.0 sec to 38.8 sec on average.

Meanwhile, it was confirmed that when the heat resistant coating C of the present disclosure includes silicone, chemical resistance is improved. In particular, it was confirmed that chemical resistance is improved by changing the silicone coating composition (increasing the quantity of organic matters). However, the type of the resin and ceramic included in the heat resistant coating C of the present disclosure is not limited to the exemplary types. The type of the resin and/or ceramic may be selected based on heat resistance, chemical resistance and electrolyte solution stability. That is, the heat resistant coating C may be configured to meet the predetermined heat resistance requirement and the predetermined chemical resistance requirement.

In another aspect of the present disclosure, the ceramic may be, for example, included in particulate form. As an embodiment, the heat resistant coating C may include ceramic particles in a resin base. That is, the heat resistant coating C may include ceramic particles. In this instance, the melting point of the ceramic particles may be, for example, about 1000°C or more.

As described above, when the melting point of the ceramic particles included in the heat resistant coating C is about 1000°C or more, the risk of side rupture is significantly reduced. Additionally, when the heat resistant coating C includes the ceramic particles in the resin base, the ceramic content may be easily adjusted. That is, it may be possible to improve the manufacturing convenience.

In another aspect of the present disclosure, the heat resistant coating C may include a first heat resistant coating C coated on the battery housing 20; and a second heat resistant coating C coated on the first heat resistant coating C.

That is, the heat resistant coating C may include a plurality of coatings that overlap each other. Furthermore, the heat resistant coating C may further include a third heat resistant coating C. Further, the heat resistant coating C may further include a k-th heat resistant coating C. In this instance, the types of the first heat resistant coating C and the second heat resistant coating C may be different.

By the above-described structure, the plurality of coatings may improve heat resistance performance and chemical resistance performance. Further, when the plurality of heat resistant coatings C having different compositions is applied, it may be possible to overcome the limitation of the single material in terms of heat resistance performance and chemical resistance performance.

In another aspect of the present disclosure, the heat resistant coating C may be about 5 micrometers to 40 micrometers in thickness. Preferably, the heat resistant coating C may be about 15 micrometers to 30 micrometers in thickness.

For example, when the thickness of the heat resistant coating C is smaller than about 5 micrometers, with a high probability, heat resistance performance may be poor. On the contrary, when the thickness of the heat resistant coating C is larger than about 40 micrometers, the coating is too thick and the internal space of the battery housing 20 is too narrow. The volume of the electrode assembly 10 that can be received in the battery cell 1 is reduced, and eventually energy density is reduced. Accordingly, the heat resistant coating C of the present disclosure is preferably about 5 micrometers to 40 micrometers in thickness, and more preferably about 15 micrometers to 30 micrometers in thickness.

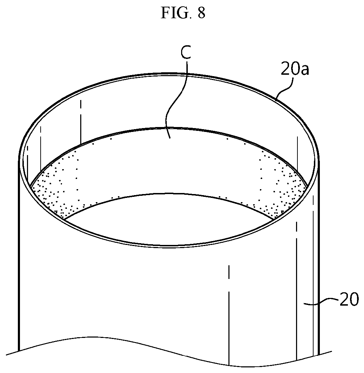

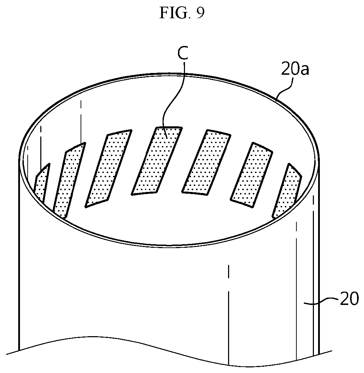

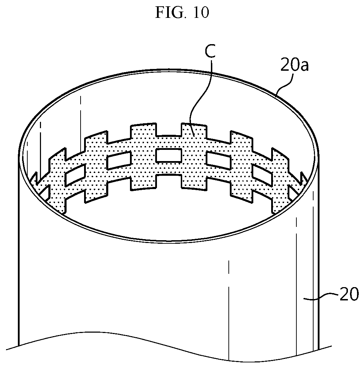

FIG. 8 is a diagram illustrating the shape of the heat resistant coating C according to an embodiment of the present disclosure, and FIG. 9 is a diagram illustrating the shape of the heat resistant coating C according to another embodiment of the present disclosure. FIG. 10 is a diagram illustrating the shape of the heat resistant coating C according to still another embodiment of the present disclosure.

Referring to FIG. 8, the heat resistant coating C may be formed in an approximately band shape having a constant width. That is, the heat resistant coating C may be formed in a band shape extended to a constant length L2 in the downward direction from the location that is the predetermined distance D far away from the open portion formed at one side of the battery housing 20 in the height direction.

As another embodiment, the heat resistant coating C may be formed in a partially coated shape in the area extended downward from the location that is the predetermined distance D far away from the open portion formed at one side of the battery housing 20 in the height direction.

For example, referring to FIG. 9, the heat resistant coating C may be formed in an approximately diagonal pattern. Alternatively, referring to FIG. 10, the heat resistant coating C may be formed in an approximately grid pattern. As described above, the shape of the heat resistant coating C is not limited to the band shape, and the heat resistant coating C may be formed in a variety of shapes. Although not shown in the drawings, the upper edge and the lower edge of the heat resistant coating C may have a curved shape. That is, the heat resistant coating C may be disposed in an area where flames produced in the battery housing 20 reach, and in some cases, may be applied in different shapes. For example, the heat resistant coating C may be formed by covering the uncoated region with a masking tape and applying a coating agent. In this instance, the shape of the heat resistant coating C may vary depending on the punched shape of the masking tape. As described above, so long as the masking tape is applied to the inner wall of the battery housing 20, the heat resistant coating C of different shapes, for example, horizontal, vertical, linear or curved shape may be applied.

By the above-described configuration, it may be possible to reduce the material of the heat resistant coating C and at the same time, to significantly improve the heat resistance performance of the heat resistant coating C.

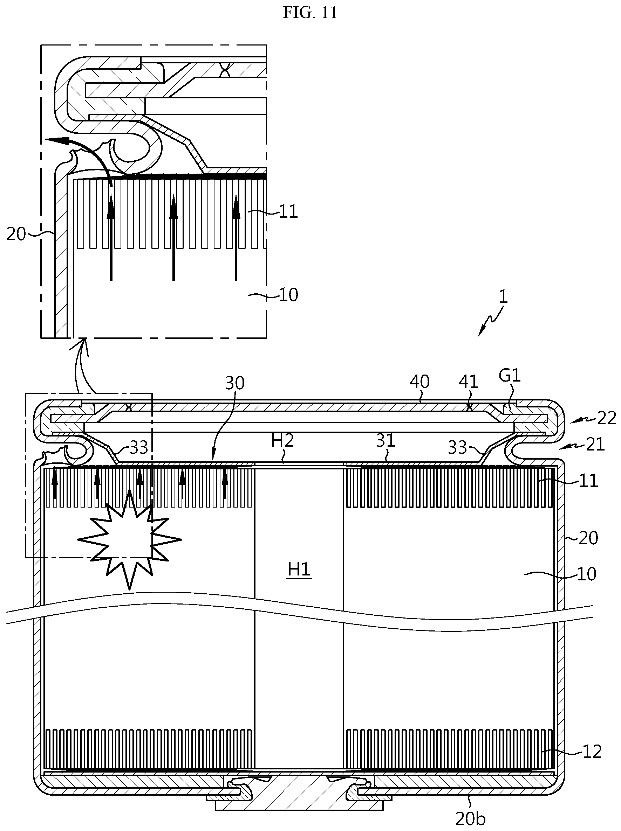

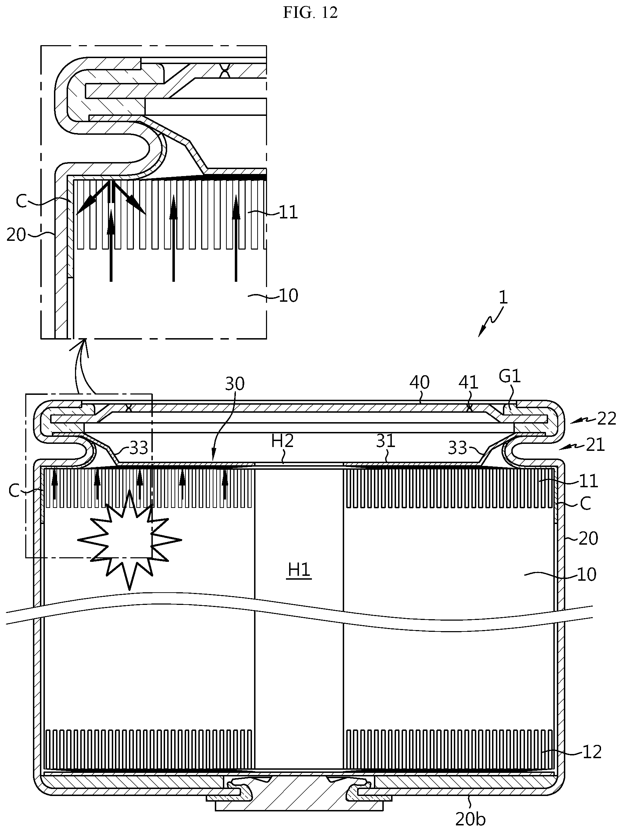

FIG. 11 is a diagram illustrating flame-induced damage to the battery housing 20 when a thermal event occurs in the battery cell 1 according to a comparative example of the present disclosure, and FIG. 12 is a diagram illustrating prevention of flame-induced damage to the battery housing 20 when a thermal event occurs in the battery cell 1 according to an embodiment of the present disclosure.

Referring to FIG. 11, when a thermal event occurs in the existing battery cell 1, due to an edge flow of flames, flames intensively contact the lower surface and the side of the beading portion 21. Accordingly, the lower surface and/or the side of the beading portion 21 gets broken, creating a hole in the sidewall of the battery cell 1 or the beading portion 21, causing side rupture or flame burst from the hole. In this case, not only the battery cell 1 in which the thermal event occurred, but also the other battery cells 1 located adjacent to the battery cell 1 may get affected, resulting in fire spread.

In contrast, referring to FIG. 12, because the heat resistant coating C is applied to the battery cell 1 according to an embodiment of the present disclosure, and more specifically, the heat resistant coating C is applied to the beading portion 21, it may be possible to effectively prevent damage to the side and/or the beading portion 21 of the battery cell 1. More specifically, referring to FIG. 12, when flames contact the lower surface of the beading portion 21, the heat resistant coating C may protect the lower surface of the beading portion 21, thereby effectively preventing flame-induced damage to the beading portion 21 and/or the side of the battery cell 1. Accordingly, it may be possible to prevent fire spread.

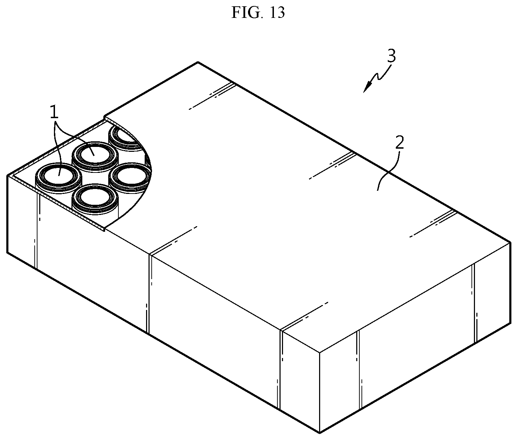

FIG. 13 is a diagram illustrating a battery pack 3 including the battery cell 1 according to an embodiment of the present disclosure.

Referring to FIG. 13, the battery pack 3 according to an embodiment of the present disclosure includes a battery assembly including a plurality of battery cells 1 electrically connected according to an embodiment of the present disclosure as described above and a pack housing 2 accommodating the battery assembly. For convenience of illustration, some components such as a busbar for electrical connection, a cooling unit and a power terminal are omitted.

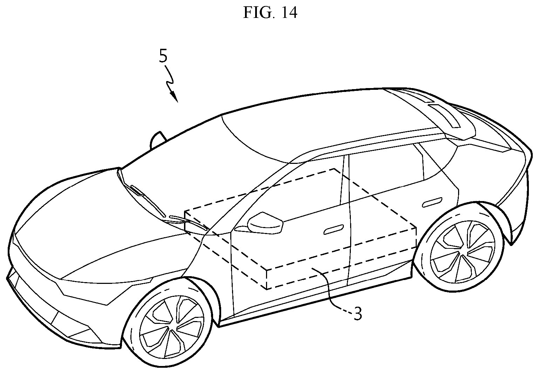

FIG. 14 is a diagram illustrating a vehicle 5 including the battery pack 3 of FIG. 13.

Referring to FIG. 14, the vehicle 5 according to an embodiment of the present disclosure may include, for example, an electric vehicle, a hybrid electric vehicle or a plug-in hybrid electric vehicle, and includes the battery pack 3 according to an embodiment of the present disclosure. The vehicle 5 includes a four-wheeled vehicle and a two-wheeled vehicle. The vehicle 5 operates using power supplied from the battery pack 3 according to an embodiment of the present disclosure.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A battery cell comprising:
an electrode assembly including a first electrode, a second electrode and a separator interposed between the first electrode and the second electrode; and
a battery housing accommodating the electrode assembly through an open portion at a side,
wherein at least part of an inside surface of the battery housing is coated by a heat resistant coating.

2. The battery cell according to claim 1, wherein the battery housing includes a beading portion recessed inward from at least part of the side.

3. The battery cell according to claim 2, wherein the heat resistant coating covers at least part of the beading portion.

4. The battery cell according to claim 2, wherein the beading portion includes:
an upper surface located at an upper position than a recessed innermost point; and
a lower surface located at a lower position than the recessed innermost point.

5. The battery cell according to claim 4, wherein the heat resistant coating covers the lower surface of the beading portion.

6. The battery cell according to claim 1, wherein a length of a coverage of the heat resistant coating in a winding axis direction has a width of 24% or more of a total length of the battery housing before deformation.

7. The battery cell according to claim 2, wherein the heat resistant coating covers at least part of an area extended from a recessed innermost point of the beading portion in an opposite direction to the open portion.

8. The battery cell according to claim 2, wherein the heat resistant coating covers at least part of an area extended from a starting point of a flat region of an upper surface of the beading portion in an opposite direction to the open portion.

9. The battery cell according to claim 1, wherein the heat resistant coating includes at least one of PI, PAI, silicone or epoxide.

10. The battery cell according to claim 1, wherein the heat resistant coating includes ceramic particles.

11. The battery cell according to claim 1, wherein the heat resistant coating includes at least one of TiO₂ or Al₂O₃.

12. The battery cell according to claim 1, wherein the heat resistant coating includes:
a first heat resistant coating present on the battery housing; and
a second heat resistant coating present on the first heat resistant coating.

13. The battery cell according to claim 1, wherein the heat resistant coating has a thickness of from 5 micrometers to 40 micrometers.

14. A battery pack comprising at least one battery cell according to any one of claims 1 to 13.

15. A vehicle comprising at least one battery pack according to claim 14.
